# EUROPÄISCHE PATENTSCHRIFT

(11) **EP 2 205 865 B1**
(45) Veröffentlichungstag und Bekanntmachung des Hinweises auf die Patenterteilung: **25.01.2017**
(21) Anmeldenummer: 08804390.6
(22) Anmeldetag: 18.09.2008
(51) Int. Cl.: F04B 1/04, F04B 53/10, B60T 8/40

(54) **KOLBENPUMPE ZUR FÖRDERUNG EINES FLUIDS UND ZUGEHÖRIGES BREMSSYSTEM**
PISTON PUMP FOR CONVEYING A FLUID AND ASSOCIATED BRAKING SYSTEM
POMPE À PISTON DESTINÉE AU REFOULEMENT D'UN FLUIDE ET SYSTÈME DE FREINAGE ASSOCIÉ

(30) Priorität: 04.10.2007 DE 102007047418
(43) Veröffentlichungstag der Anmeldung: 14.07.2010
(73) Patentinhaber: Robert Bosch GmbH, 70442 Stuttgart (DE)
(72) Erfinder: HIPP, Josef, 87637 Seeg (DE); SCHUMANN, Beate, 74357 Boennigheim (DE); BELING, Horst, 74074 Heilbronn (DE); ZIMMERMANN, Marc, 71720 Oberstenfeld (DE); HALLERMANN, Stefan, 87437 Kempten (DE)
(86) Internationale Anmeldenummer: PCT/EP2008/062451
(87) Internationale Veröffentlichungsnummer: WO 2009/043731

(56) Entgegenhaltungen:
- DE-A1- 19 747 850
- US-B1- 6 471 496

## Beschreibung

### Stand der Technik

Die Erfindung geht aus von einer Kolbenpumpe zur Förderung eines Fluids nach der Gattung des unabhängigen Patentanspruchs 1, welche insbesondere in Bremssystemen von Fahrzeugen verwendet wird.

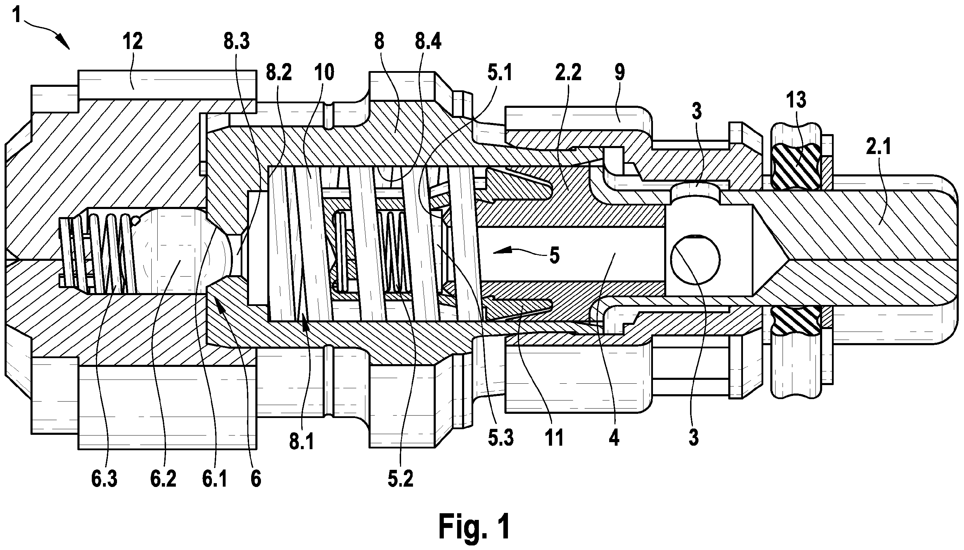

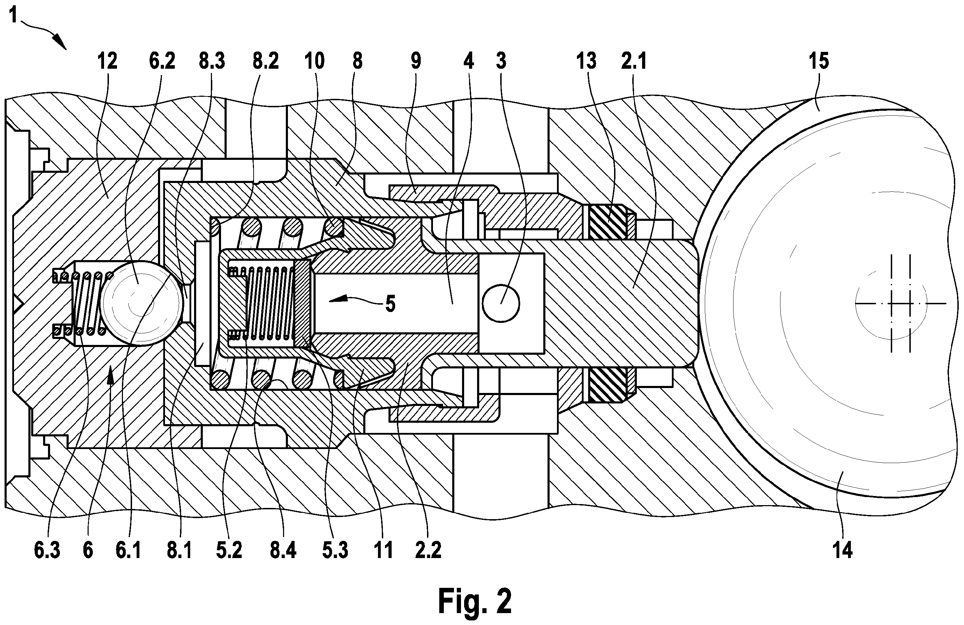

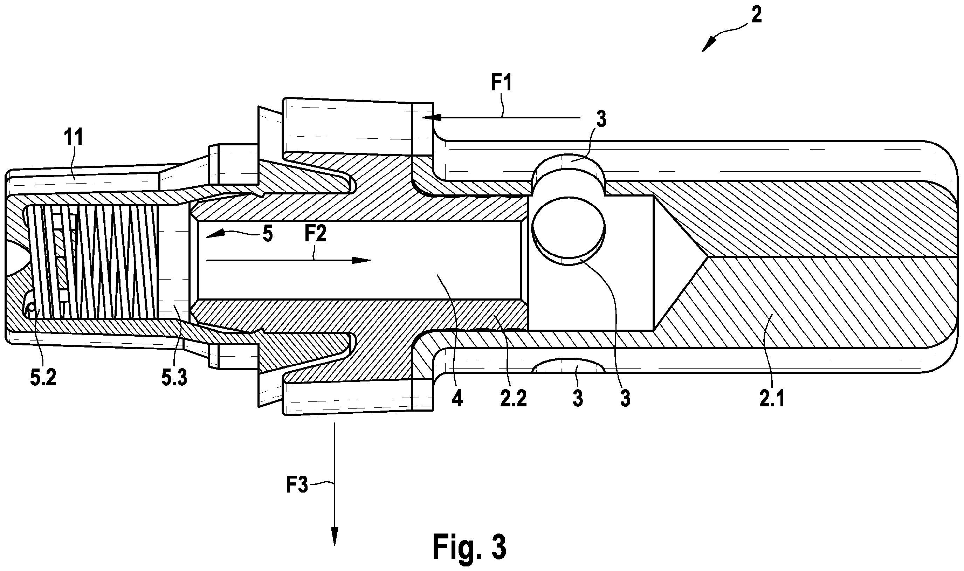

Solche Kolbenpumpen werden in Fahrzeugen mit hydraulischen oder elektrohydraulischen Fahrzeugbremssystemen vorzugsweise als Rückförderpumpen verwendet, um einen Bremsdruck in den Radbremszylindern wahlweise abzusenken oder zu erhöhen, wodurch der Bremsdruck in den Radbremszylindern regelbar ist. Eine solche Regelung kann beispielsweise in einem Antiblockiersystem (ABS), in einem Antriebsschlupfregelungssystem (ASR-System), in einem Fahrdynamikregelsystem usw. durchgeführt werden. Fig. 1 bis 3 zeigen eine herkömmliche Kolbenpumpe, die in einem Fahrzeugbremssystem eingesetzt wird. Wie aus Fig. 1 bis 3 ersichtlich ist, umfasst eine herkömmliche Kolbenpumpe 1 eine Kolbenbaugruppe 2, die ein erstes Kolbenelement 2.1 mit einem Dichtelement 13 und ein zweites Kolbenelement 2.2 aufweist, ein Einlassventil 5, ein Auslassventil 6 und einen Zylinder 8. Das Einlassventil 5 ist als Rückschlagventil ausgebildet und umfasst ein Käfigelement 11, in dem eine Einlassventilfeder 5.2 und ein Einlassventildichtelement 5.3 angeordnet ist, wobei das Einlassdichtelement 5.3 beispielsweise als Dichtscheibe ausgeführt ist, die mit einem korrespondierenden Einlassventilsitz 5.1 dichtend zusammen wirken kann, der am zweiten Kolbenelement 2.2 angeordnet ist, wobei das zweite Kolbenelement 2.2 kraftschlüssig mit dem Käfigelement 11 verbunden ist. Das Auslassventil 6 ist ebenfalls als federbelastetes Rückschlagventil ausgebildet und in einem Deckelelement 12 angeordnet. Das Auslassventil 6 wird geöffnet, wenn ein Druck in einem Kompressionsraum 8.1 größer als eine auf ein Auslassventildichtelement 6.2 des Auslassventils 6 wirkende Federkraft einer Auslassventilfeder 6.3 ist, wodurch das Auslassventildichtelement 6.2 aus einem an einer Auslassöffnung 8.3 des Zylinders 8 angeordneten Auslassventilsitz 6.1 gedrückt wird.

Während eines Saughubs der Kolbenbaugruppe 2 wird Fluid über eine Filterhülse 9 und im ersten Kolbenelement 2.1 angeordnete Querbohrungen 3 radial angesaugt und über die mit den Querbohrungen 3 korrespondierende Längsbohrung 4 im zweiten Kolbenelement 2.2 und das geöffnete Einlassventil 5 in den Kompressionsraum 8.1 geführt, der im Zylinder 8 zwischen dem Einlassventil 5 und dem Auslassventil 6 angeordnet ist. Nach Erreichen eines oberen Totpunktes kehrt sich die Bewegungsrichtung der Kolbengruppe 2 um, so dass das zweite Kolbenelement 2.2 mit dem Einlassventilsitz 5.1 über das durch einen in einem Exzenterraum 15 angeordneten Exzenter 14 angetriebene erste Kolbenelement 2.1 dichtend auf das Einlassventildichtelement 5.3 gedrückt wird und das Einlassventil 5 geschlossen wird. Nun erfolgt im Kompressionsraum 8.1 so lange ein Druckaufbau, bis der Druck im Kompressionsraum 8.1 größer als die Federkraft des Auslassventils 6 ist, wodurch das unter Druck stehende Fluid über eine Auslassöffnung 8.3 und das geöffnete Auslassventil 6 aus dem Druckraum 8.1 in eine nicht dargestellte Auslassleitung geleitet wird.

Nach Erreichen des unteren Totpunktes kehrt sich die Bewegungsrichtung der Kolbengruppe 2 wieder um, so dass das Auslassventil 6 wieder schließt und der Ansaughub wieder beginnt, wobei eine Rückstellkraft F2 einer im Kompressionsraum 8.1 angeordneten und von einer Zylinderwand 8.4 geführten Rückstellfeder 10, die beispielsweise als Spiralfeder mit angeschliffenen Endwendungen ausgeführt ist und sich an einem Zylinderboden 8.2 und an einem Käfigelement 11 abstützt, gegen das Käfigelement 11 des Einlassventils 5 und somit gegen das zweite Kolbenelement 2.2 wirkt, um die Kolbenbaugruppe 2 wieder in Richtung oberer Totpunkt zu bewegen. Daher wirken auf das zweite Kolbenelement 2.2, das den Einlassventilsitz 5.1 trägt, während des Betriebs axiale Kräfte F1 und F2, welche zum einen vom Exzenter 14 bewirkt und über das erste Kolbenelement 2.1 eingeleitet werden, und zum anderen von der Rückstellfeder 10 bewirkt und über das Käfigelement 11 eingeleitet werden, und radiale Kräfte F3, die durch den herrschenden Systemdruck erzeugt werden. Daher muss das als Ventilsitz ausgeführte zweite Kolbenelement 22 als stabiles Bauelement, vorzugsweise als Metallbauteil, hergestellt werden und kann nur bedingt durch Ansaugbohrungen in Form von Querbohrungen geschwächt werden. Die Querbohrungen 3 sind daher im ersten Kolbenelement 2.1 eingebracht, wodurch sich eine relativ langer als Längsbohrung 4 ausgeführter Einlassbereich ergibt.

Eine Kolbenpumpe nach den gattungsbildenden Merkmalen des Anspruchs 1 ist weiterhin bekannt aus der DE 197 47 850 A1. Diese Kolbenpumpe hat einen Kolben, der als Verbundteil ausgebildet ist und der einen Stahlkern aufweist, der mit einem Gleitmantel aus Kunststoff an seinem Umfang umspritzt ist. Ein konischer Ventilsitz ist am Ende eines Sacklochs innerhalb des Gleitmantels aus Kunststoff ausgebildet. Das Sackloch ist oberhalb des Ventilsitzes von einem Querloch durchsetzt. Sackloch und Querloch sind relativ lange und haben im Verhältnis zu den Außenabmessungen des Gleitmantels einen kleinen Innendurchmesser.

### Offenbarung der Erfindung

Die erfindungsgemäße Kolbenpumpe nach den Merkmalen des unabhängigen Patentanspruchs 1 hat demgegenüber den Vorteil, dass ein zweites Kolbenelement einer Kolbenbaugruppe als Hülse aus einem verschleißfesten Material ausgeführt ist, das axial wirkende Kraftkomponenten aufnimmt, wobei der Einlassventilsitz an einer Biegekante des als Hülse ausgeführten zweiten Kolbenelements angeordnet ist, und wobei im zweiten Kolbenelement mindestens eine mit einer Längsbohrung korrespondierende Querbohrung eingebracht ist. Das als Hülse ausgeführte zweite Kolbenelement kann extrem kostengünstig hergestellt werden. Zudem kann der als Längsbohrung ausgeführte Einlasskanal so extrem kurz und groß dimensioniert werden, dass der Strömungswiderstand in vorteilhafter Weise auf ein Minimum reduziert wird. Dies hat zur Folge, dass die erfindungsgemäße Kolbenpumpe schneller gefüllt werden kann und dadurch eine bessere Druckaufbaudynamik erreicht wird, was insbesondere bei einer Ausführung als Stufenkolbenpumpe relevant ist. Insgesamt ermöglicht die Erfindung eine kostengünstige und bauraumoptimierte Kolbenpumpe, die beispielsweise als Rückförderpumpe in einem Bremssystem für ein Fahrzeug eingesetzt werden kann.

Durch die in den abhängigen Ansprüchen aufgeführten Maßnahmen und Weiterbildungen sind vorteilhafte Verbesserungen der im unabhängigen Patentanspruch angegebenen Kolbenpumpe möglich.

Besonders vorteilhaft ist, dass das als Hülse ausgeführte zweite Kolbenelement in einem Tiefziehverfahren oder einem Kaltschlagverfahren herstellbar ist, wobei die mindestens eine Querbohrung in das als Hülse ausgeführte zweite Kolbenelement gestanzt oder gebohrt ist. Bei einer Ausführung als Tiefziehteil kann durch eine Kaltverfestigung im Herstellungsprozess in vorteilhafter Weise auf eine Wärmebehandlung verzichtet werden. In der Regel muss der Einlassventilsitz nicht nachbearbeitet werden. Bei Bedarf kann der an der Biegekante angeordnete Einlassventilsitz zur Erhöhung der Dichtigkeit nachgeprägt werden.

In Ausgestaltung der erfindungsgemäßen Kolbenpumpe kann ein erstes Kolbenelement der Kolbenbaugruppe beispielsweise als zylindrische Nadelrolle ausgeführt werden und steht in vorteilhafter Weise als in Massenfertigung hergestelltes Normteil zur Verfügung. Da eine Übertragung der Antriebskraft eines Exzenters über eine Linienberührung auf dem als massive Metallnadelrolle, vorzugsweise als Stahlnadelrolle ausgeführten ersten Kolbenteils erfolgt, kann der Verschleiß in vorteilhafter Weise reduziert werden. Das erste Kolbenelement kann beispielsweise lose mit dem zweiten Kolbenelement gekoppelt werden. Alternativ kann das erste Kolbenelement formschlüssig und/oder kraftschlüssig mit dem zweiten Kolbenelement gekoppelt werden. Durch die Ausführung des zweiten Kolbenelements als Hülse, die im Tiefziehverfahren oder Kaltschlagverfahren herstellbar ist, ist es möglich, den Einlassventildichtsitz, einen Formschluss zur festen Kopplung mit dem ersten Kolbenelement und die mindestens eine Querbohrung und die korrespondierende Längsbohrung ohne spanabhebende Bearbeitung zu realisieren. Die erfindungsgemäße Kolbenbaugruppe kann durch eine entsprechende Ausführung des als Hülse ausgeführten zweiten Kolbenelements und der Kopplung mit dem ersten Kolbenelement ohne kostenintensives Einsteckschleifen auf einfache Weise zweistufig ausgeführt werden.

In weiterer Ausgestaltung der erfindungsgemäßen Kolbenpumpe weist ein Käfigelement ein elastisches Hochdruckdichtelement auf, das ausgeführt ist, um radial wirkende Kraftkomponenten aufzunehmen und über eine radiale Dichtfläche gegen eine Zylinderwand abzudichten und über eine axiale Dichtfläche gegen eine Schulter des als Hülse ausgeführten zweiten Kolbenelements axial abzudichten. Da zwischen dem Käfigelement mit dem Hochdruckdichtelement und dem zweiten Kolbenelement mit dem Einlassventilsitz im Gegensatz zur herkömmlichen Kolbenpumpe kein Kraftschluss mehr besteht, entfällt bei der Herstellung der erfindungsgemäßen Kolbenpumpe in vorteilhafter Weise ein Montageschritt. Zudem werden durch den Wegfall des Kraftschlusses auftretende Spannungen zwischen dem Käfigelement und dem zweiten Kolbenelement reduziert, wobei das Käfigelement mit dem elastischen Hochdruckdichtelement als Kunststoffspritzteile ausgeführt werden kann. Die Ausführung als Kunststoffspritzteile ermöglicht in vorteilhafter Weise eine einfache, kostengünstige Herstellung des Bauelements, wobei eine komplexe Formgestaltung möglich ist. Die radiale Dichtfläche wird beispielsweise durch eine druckbedingte Aufweitung des Hochdruckdichtelements ausgeformt. Insgesamt ermöglicht die erfindungsgemäße Kolbenpumpe eine extreme Kostenreduzierung der Kolbenbaugruppe und eine einfache Montage. Zudem stellt die erfindungsgemäße Kolbenpumpe ein verbessertes Saugverhalten, eine höhere Druckbeständigkeit und einen extrem kurzen Einlassbereich zur Verfügung.

Vorteilhafte, nachfolgend beschriebene Ausführungsformen der Erfindung sowie die zu deren besserem Verständnis oben erläuterten, herkömmlichen Ausführungsbeispiele sind in den Zeichnungen dargestellt. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische perspektivische Darstellung einer herkömmlichen Kolbenpumpe.
Fig. 2 zeigt eine schematische Schnittdarstellung einer herkömmlichen Kolbenpumpe.
Fig. 3 zeigt eine schematische perspektivische Darstellung der Komponenten eines Einlassventils für die herkömmliche Kolbenpumpe gemäß Fig. 1 oder 2.
Fig. 4 zeigt eine schematische perspektivische Darstellung einer erfindungsgemäßen Kolbenpumpe.

### Ausführungsformen der Erfindung

Eine erfindungsgemäße Kolbenpumpe 21, die als Rückförderpumpe in einem Fahrzeugbremssystem eingesetzt werden kann, umfasst im Wesentlichen die gleichen Komponenten wie die unter Bezugnahem auf Fig. 1 bis 3 beschriebene herkömmliche Kolbenpumpe 1. Daher werden hier zur Vermeidung von Textwiederholungen nur die wesentlichen Unterschiede zwischen der erfindungsgemäßen Kolbenpumpe und der herkömmlichen Kolbenpumpe 1 gemäß Fig. 1 bis 3 detailliert beschrieben. Im Unterschied zur herkömmlichen Kolbenpumpe 1 gemäß Fig. 1 bis 3, umfasst die erfindungsgemäße Kolbenpumpe eine verbesserte Kolbenbaugruppe in Kombination mit einem Hochdruckdichtelement.

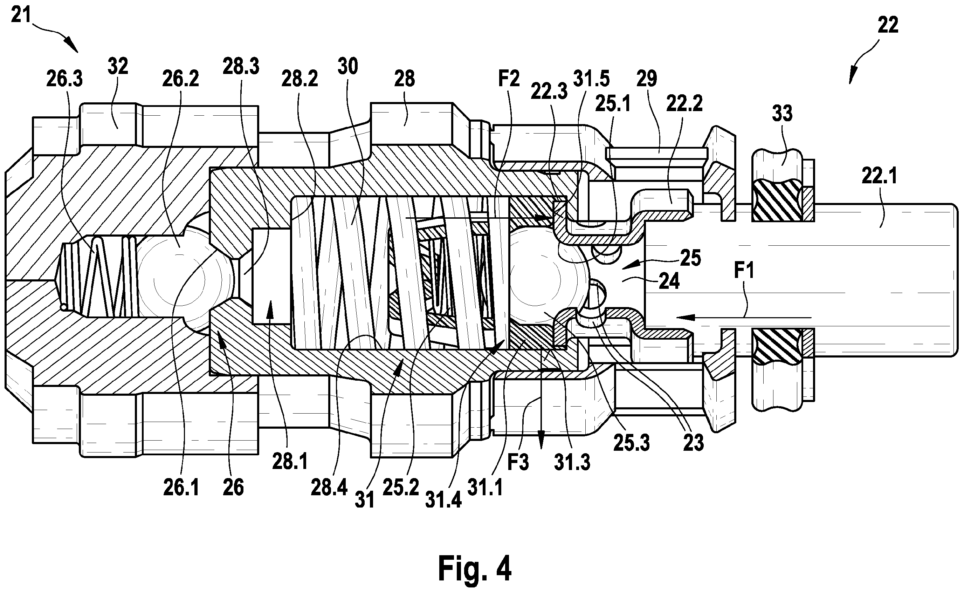

Wie aus Fig. 4 ersichtlich ist, umfasst die erfindungsgemäße Kolbenpumpe 21 analog zur herkömmlichen Kolbenpumpe 1 eine Kolbenbaugruppe 22, ein Einlassventil 25, ein Auslassventil 26 und einen Zylinder 28. Im Unterschied zur herkömmlichen Kolbenpumpe 1 ist ein erstes Kolbenelement 22.1 der Kolbenbaugruppe 22 im Unterschied zur herkömmlichen Kolbenpumpe 1 als zylindrische Nadelrolle ausgeführt und ein zweites Kolbenelement 22.2 der Kolbenbaugruppe 22 ist in einem Tiefziehverfahren oder einem Kaltschlagverfahren als Hülse aus einem verschleißfesten Material hergestellt. Das Einlassventil 25 der erfindungsgemäßen Kolbenpumpe 21 ist als Rückschlagventil ausgebildet umfasst analog zur herkömmlichen Kolbenpumpe 1 ein Käfigelement 31, in dem eine Einlassventilfeder 25.2 und ein Einlassventildichtelement 25.3, das beispielsweise als Dichtkugel ausgeführt ist, angeordnet ist, und einen korrespondierenden Einlassventilsitz 25.1, der an einer Biegekante des als Hülse ausgeführten zweiten Kolbenelements 22.2 angeordnet ist, wobei im zweiten Kolbenelement 22.2 mehrere mit einer Längsbohrung 24 korrespondierende Querbohrungen 23 gestanzt oder gebohrt sind. Zur Verbesserung der Dichtigkeit kann der an der Biegekante angeordnete Einlassventilsitz 25.1 nachgeprägt werden. Das Einlassventildichtelement 25.3 wird durch eine Federkraft der Einlassventilfeder 25.2 dichtend in den korrespondierenden Einlassventilsitz 25.1 gedrückt. Im Unterschied zur herkömmlichen Kolbenpumpe 1 weist das Käfigelement 31 der erfindungsgemäßen Kolbenpumpe 21 ein elastisches Hochdruckdichtelement 31.1 auf, das ausgeführt ist, um radial wirkende Kraftkomponenten F3 aufzunehmen und über eine radiale Dichtfläche 31.3 gegen eine Zylinderwand 28.4 abzudichten und über eine axiale Dichtfläche 31.5 gegen eine Schulter 22.3 des zweiten Kolbenelements 22.2 axial abzudichten, welche an der axialen Dichtfläche 31.5 anliegt.

Das zweite Kolbenelement 22.2 nimmt im Unterschied zur herkömmlichen Kolbenpumpe 1 nur noch die axial wirkenden Kraftkomponenten F1 und F2 auf, so dass im zweiten Kolbenelement 22.2 die Längsbohrung 24 und die mit der Längsbohrung 24 korrespondierenden Querbohrungen 23 ohne Festigkeitsverlust eingebracht werden können. Im dargestellten Ausführungsbeispiel sind das Käfigelement 31 mit dem elastischen Hochdruckdichtelement 31.1 als Kunststoffspritzteile ausgeführt, wodurch in vorteilhafter Weise eine einfache, kostengünstige Herstellung des Bauelements ermöglicht wird, wobei eine komplexe Formgestaltung möglich ist. Zudem ist das erste Kolbenelement 22.1 im dargestellten Ausführungsbeispiel fest mit dem zweiten Kolbenelement 22.2 gekoppelt und weist ein Dichtelement 33 auf. Bei einer nicht dargestellten Ausführungsform kann das erste Kolbenelement 22.1 lose mit dem zweiten Kolbenelement 22.2 gekoppelt werden. Insgesamt ermöglicht die erfindungsgemäße Ausführung der Kolbenbaugruppe 22 in Kombination mit dem Hochdruckdichtelement 31.1 eine extreme Kostenreduzierung der Kolbenpumpe 21 und eine einfache Montage. Zudem kann der als Längsbohrung 24 ausgeführte Einlasskanal so extrem kurz und groß dimensioniert werden, dass der Strömungswiderstand in vorteilhafter Weise auf ein Minimum reduziert werden kann. Dies hat zur Folge, dass die erfindungsgemäße Kolbenpumpe 21 schneller gefüllt werden kann und dadurch eine bessere Druckaufbaudynamik erreicht wird.

Das Auslassventil 26 ist ebenfalls als federbelastetes Rückschlagventil ausgebildet und in einem Deckelelement 32 angeordnet. Das Auslassventil 26 wird geöffnet, wenn ein Druck in einem Kompressionsraum 28.1 größer als eine auf ein Auslassventildichtelement 26.2 des Auslassventils 26 wirkende Federkraft einer Auslassventilfeder 26.3 ist, wodurch das Auslassventildichtelement 26.2 aus einem an einer Auslassöffnung 28.3 des Zylinders 28 angeordneten Auslassventilsitz 26.1 gedrückt wird.

Wie aus Fig. 4 weiter ersichtlich ist, ist die Kolbenbaugruppe 22 mit dem Einlassventil 25 längsbeweglich im Zylinder 28 geführt, wobei während eines Saughubs der Kolbenbaugruppe 22 Fluid über eine Filterhülse 29 durch die Querbohrungen 23 im zweiten Kolbenelement 22.2 radial angesaugt und über die mit den Querbohrungen 23 korrespondierende Längsbohrung 24 durch das geöffnete Einlassventil 25 in den Kompressionsraum 28.1 geführt wird. Nach Erreichen eines oberen Totpunktes kehrt sich die Bewegungsrichtung der Kolbengruppe 22 um, so dass das zweite Kolbenelement 22.2 mit dem Einlassventilsitz 25.1 über das durch einen nicht dargestellten Exzenter angetriebene erste Kolbenelement 22.1 dichtend auf das Einlassventildichtelement 25.3 gedrückt wird, und das Einlassventil 25 geschlossen wird. Nun erfolgt im Kompressionsraum 28.1 so lange ein Druckaufbau, bis der Druck im Kompressionsraum 28.1 größer als die Federkraft des Auslassventils 26 ist, wodurch das unter Druck stehende Fluid über die Auslassöffnung 28.3 und das geöffnete Auslassventil 26 aus dem Druckraum 28.1 in eine nicht dargestellte Auslassleitung geleitet wird.

Nach Erreichen des unteren Totpunktes kehrt sich die Bewegungsrichtung der Kolbengruppe 22 wieder um, so dass das Auslassventil 26 wieder schließt und der Ansaughub wieder beginnt, wobei eine Rückstellkraft F2 einer im Kompressionsraum 28.1 angeordneten Rückstellfeder 30, die beispielsweise als Spiralfeder ausgeführt ist und sich auf einem Zylinderboden 28.2 abstützt, gegen einen radialen Auflagebereich 31.4 drückt, der am Hochdruckdichtelement 31.1 angeordnet ist. Die Rückstellkraft F2 wirkt über das Hochdruckdichtelement 31.1 und die axiale Dichtfläche 31.5 axial auf die Schulter 22.3 des zweiten Kolbenelements 22.2, wodurch die Kolbenbaugruppe 22 wieder in Richtung oberer Totpunkt bewegt wird. Da das elastische Hochdruckdichtelement 31.1 zwischen der metallischen Rückstellfeder 30 und dem aus einem verschleißbeständigen und somit hartem Material hergestellten zweiten Kolbenelement 22.2 angeordnet ist, wird die radiale Dichtfläche 31.3 druckbedingt aufgeweitet, so dass das Hochdruckdichtelement 31.1 mit seinem vollständigen radialen Außendurchmesser dichtend an der Zylinderwand 28.4 anliegt. Während der Kompression des in den Kompressionsraum 28.1 eingesaugten Fluids dichtet das Hochdruckdichtelement 31.1 über die radiale Dichtfläche 31.3 radial gegen die Zylinderwand 28.4 und durch die axiale Dichtfläche 31.5 gegen die Schulter 22.3 des zweiten Kolbenelements 22.2 ab. Zusätzlich dichtet das Einlassventildichtelement 25.3 axial gegen den Einlassventilsitz 25.1 im zweiten Kolbenelement 22.2 ab.

Die erfindungsgemäße Kolbenpumpe umfasst in vorteilhafter Weise viele Bauteile, die sehr einfach und kostengünstig hergestellt werden können. Zudem kann der Strömungswiderstand in vorteilhafter Weise auf ein Minimum reduziert wird, wodurch die erfindungsgemäße Kolbenpumpe schneller gefüllt und dadurch eine bessere Druckaufbaudynamik erreicht werden kann. Insgesamt ermöglicht die Erfindung eine kostengünstige und bauraumoptimierte Kolbenpumpe, die beispielsweise als Rückförderpumpe in einem Bremssystem für ein Fahrzeug eingesetzt werden kann.

## Patentansprüche

1. Kolbenpumpe mit einer Kolbenbaugruppe (22), die ein erstes Kolbenelement (22.1), ein zweites Kolbenelement (22.2), mindestens eine Querbohrung (23) und eine mit der mindestens einen Querbohrung (23) korrespondierende Längsbohrung (24) umfasst, einem Zylinder (28), in welchem die Kolbenbaugruppe (22) längsbeweglich geführt ist, und einem Einlassventil (25), das ein Käfigelement (31), in dem eine Einlassventilfeder (25.2) und ein Einlassventildichtelement (25.3) angeordnet ist, und einen korrespondierenden Einlassventilsitz (25.1) umfasst, der am zweiten Kolbenelement (22.1) angeordnet ist, wobei das Einlassventildichtelement (25.3) durch eine Federkraft der Einlassventilfeder (25.2) dichtend in den korrespondierenden Einlassventilsitz (25.1) drückbar ist, um die Längsbohrung (24) zu verschließen, wobei über die in der Kolbenbaugruppe (22) angeordnete mindestens eine Querbohrung (23) Fluid ansaugbar ist, das durch die Längsbohrung (24) über das Einlassventil (25) in einen Kompressionsraum (28.1) leitbar ist, in dem eine Rückstellfeder (30) für die Kolbenbaugruppe (22) angeordnet ist, **dadurch gekennzeichnet, dass** das zweite Kolbenelement (22.2) als Hülse aus einem verschleißfesten Material ausgeführt ist, das axial wirkende Kraftkomponenten aufnimmt, wobei der Einlassventilsitz (25.1) an einer Biegekante des als Hülse ausgeführten zweiten Kolbenelements (22.2) angeordnet ist, wobei im zweiten Kolbenelement (22.1) die mit der Längsbohrung (24) korrespondierende mindestens eine Querbohrung (23) eingebracht ist.

2. Kolbenpumpe nach Anspruch 1, **dadurch gekennzeichnet, dass** das als Hülse ausgeführte zweite Kolbenelement (22.2) in einem Tiefziehverfahren oder einem Kaltschlagverfahren herstellbar ist, wobei die mindestens eine Querbohrung (23) in das als Hülse ausgeführte zweite Kolbenelement (22.2) gestanzt oder gebohrt ist.

3. Kolbenpumpe nach Anspruch 1 oder 2, **dadurch gekennzeichnet, dass** der an der Biegekante angeordnete Einlassventilsitz (25.1) nachgeprägt ist.

4. Kolbenpumpe nach einem der Ansprüche 1 bis 3, **dadurch gekennzeichnet, dass** das erste Kolbenelement (22.1) als zylindrische Nadelrolle ausgeführt ist.

5. Kolbenpumpe nach einem der Ansprüche 1 bis 4, **dadurch gekennzeichnet, dass** das erste Kolbenelement (22.1) lose mit dem zweiten Kolbenelement (22.1) gekoppelt ist.

6. Kolbenpumpe nach einem der Ansprüche 1 bis 4, **dadurch gekennzeichnet, dass** das erste Kolbenelement (22.1) formschlüssig und/oder kraftschlüssig mit dem zweiten Kolbenelement (22.1) gekoppelt ist.

7. Kolbenpumpe nach einem der Ansprüche 1 bis 6, **dadurch gekennzeichnet, dass** das Käfigelement (31) ein elastisches Hochdruckdichtelement (31.1) aufweist, das ausgeführt ist, um radial wirkende Kraftkomponenten aufzunehmen und über eine radiale Dichtfläche (31.3) gegen eine Zylinderwand (28.4) abzudichten und über eine axiale Dichtfläche (31.5) gegen eine Schulter (22.3) des als Hülse ausgeführten zweiten Kolbenelements (22.1) axial abzudichten.

8. Kolbenpumpe nach Anspruch 7, **dadurch gekennzeichnet, dass** die radiale Dichtfläche (31.3) durch eine druckbedingte Aufweitung des Hochdruckdichtelements (31.1) ausformbar ist.

9. Kolbenpumpe nach Anspruch 7 oder 8, **dadurch gekennzeichnet, dass** das Käfigelement (31) mit dem elastischen Hochdruckdichtelement (31.1) als Kunststoffspritzteil ausgeführt ist.

10. Bremssystem für ein Fahrzeug, **gekennzeichnet durch** eine Rückförderpumpe, die als Kolbenpumpe (21) nach einem der Ansprüche 1 bis 9 ausgeführt ist.

## Claims

1. Piston pump having a piston assembly (22) which comprises a first piston element (22.1), a second piston element (22.2), at least one transverse bore (23) and a longitudinal bore (24) which corresponds with the at least one transverse bore (23), having a cylinder (28) in which the piston assembly (22) is guided in longitudinally movable fashion, and having an inlet valve (25) which comprises a cage element (31), in which an inlet valve spring (25.2) and an inlet valve sealing element (25.3) are arranged, and comprises a corresponding inlet valve seat (25.1) which is arranged on the second piston element (22.1), wherein the inlet valve sealing element (25.3) can be pressed sealingly into the corresponding inlet valve seat (25.1) by a spring force of the inlet valve spring (25.2) in order to close the longitudinal bore (24), wherein fluid can be drawn in via the at least one transverse bore (23) arranged in the piston assembly (22), which fluid can be conducted through the longitudinal bore (24) by the inlet valve (25) into a compression chamber (28.1) in which a restoring spring (30) for the piston assembly (22) is arranged, **characterized in that** the second piston element (22.2) is in the form of a sleeve composed of wear-resistant material which absorbs axially acting force components, wherein the inlet valve seat (25.1) is arranged on a bending edge of the second piston element (22.2) in the form of a sleeve, wherein the at least one transverse bore (23) which corresponds with the longitudinal bore (24) is formed in the second piston element (22.1).

2. Piston pump according to Claim 1, **characterized in that** the second piston element (22.2) in the form of a sleeve can be produced in a deep-drawing process or in a stamping process, wherein the at least one transverse bore (23) is punched or drilled into the second piston element (22.2) in the form of a sleeve.

3. Piston pump according to Claim 1 or 2, **characterized in that** the inlet valve seat (25.1) arranged on the bending edge is restruck.

4. Piston pump according to one of Claims 1 to 3, **characterized in that** the first piston element (22.1) is in the form of a cylindrical needle roller.

5. Piston pump according to one of Claims 1 to 4, **characterized in that** the first piston element (22.1) is loosely coupled to the second piston element (22.1).

6. Piston pump according to one of Claims 1 to 4, **characterized in that** the first piston element (22.1) is coupled in positively locking and/or non-positively locking fashion to the second piston element (22.1).

7. Piston pump according to one of Claims 1 to 6, **characterized in that** the cage element (31) has an elastic high-pressure sealing element (31.1) which is designed to absorb radially acting force components and to seal by way of a radial sealing surface (31.3) against a cylinder wall (28.4) and to seal axially by way of an axial sealing surface (31.5) against a shoulder (22.3) of the second piston element (22.1) in the form of a sleeve.

8. Piston pump according to Claim 7, **characterized in that** the radial sealing surface (31.3) can be formed by way of a pressure-induced expansion of the high-pressure sealing element (31.1).

9. Piston pump according to Claim 7 or 8, **characterized in that** the cage element (31) with the elastic high-pressure sealing element (31.1) is formed as a plastics injection-moulded part.

10. Brake system for a vehicle, **characterized by** a return delivery pump which is designed as a piston pump (21) according to one of Claims 1 to 9.

## Revendications

1. Pompe à piston comprenant un module de piston (22) qui comprend un premier élément de piston (22.1), un deuxième élément de piston (22.2), au moins un alésage transversal (23) et un alésage longitudinal (24) correspondant à l'au moins un alésage transversal (23), un cylindre (28) dans lequel est guidé de manière déplaçable longitudinalement le module de piston (22), et une soupape d'admission (25) qui comprend un élément de cage (31) dans lequel est disposé un ressort de soupape d'admission (25.2) et un élément d'étanchéité de soupape d'admission (25.3), et un siège de soupape d'admission (25.1) correspondant qui est disposé au niveau du deuxième élément de piston (22.1), l'élément d'étanchéité de soupape d'admission (25.3) pouvant être pressé par une force de ressort du ressort de soupape d'admission (25.2) de manière hermétique dans le siège de soupape d'admission (25.1) correspondant, afin de fermer l'alésage longitudinal (24), du fluide pouvant être aspiré par le biais de l'au moins un alésage transversal (23) disposé dans le module de piston (22), lequel peut être conduit à travers l'alésage longitudinal (24) par le biais de la soupape d'admission (25) dans un espace de compression (28.1), dans lequel est disposé un ressort de rappel (30) pour le module de piston (22), **caractérisé en ce que** le deuxième élément de piston (22.2) est réalisé sous forme de douille en un matériau résistant à l'usure qui reçoit des composantes de force agissant axialement, le siège de soupape d'admission (25.1) étant disposé au niveau d'une arête de flexion du deuxième élément de piston (22.2) réalisé sous forme de douille, l'au moins un alésage transversal (23) correspondant à l'alésage longitudinal (24) étant réalisé dans le deuxième élément de piston (22.1).

2. Pompe à piston selon la revendication 1, **caractérisée en ce que** le deuxième élément de piston (22.2) réalisé sous forme de douille peut être fabriqué par un procédé d'emboutissage profond ou un procédé de matriçage à froid, l'au moins un alésage transversal (23) étant estampé ou percé dans le deuxième élément de piston (22.2) réalisé sous forme de douille.

3. Pompe à piston selon la revendication 1 ou 2, **caractérisée en ce que** le siège de soupape d'admission (25.1) disposé au niveau de l'arête de flexion est gaufré ultérieurement.

4. Pompe à piston selon l'une quelconque des revendications 1 à 3, **caractérisée en ce que** le premier élément de piston (22.1) est réalisé sous forme de cage à aiguilles cylindrique.

5. Pompe à piston selon l'une quelconque des revendications 1 à 4, **caractérisée en ce que** le premier élément de pompe (22.1) est accouplé de manière lâche au deuxième élément de piston (22.1).

6. Pompe à piston selon l'une quelconque des revendications 1 à 4, **caractérisée en ce que** le premier élément de piston (22.1) est accouplé par engagement par correspondance de formes et/ou par force au deuxième élément de piston (22.1).

7. Pompe à piston selon l'une quelconque des revendications 1 à 6, **caractérisée en ce que** l'élément de cage (31) présente un élément d'étanchéité haute pression élastique (31.1) qui est réalisé de manière à recevoir les composantes de force agissant radialement et à réaliser l'étanchéité par le biais d'une surface d'étanchéité radiale (31.3) par rapport à une paroi de cylindre (28.4) et à réaliser une étanchéité axiale par le biais d'une surface d'étanchéité axiale (31.5) par rapport à un épaulement (22.3) du deuxième élément de piston (22.1) réalisé sous forme de douille.

8. Pompe à piston selon la revendication 7, **caractérisée en ce que** la surface d'étanchéité radiale (31.3) peut être formée par un élargissement, dû à la pression, de l'élément d'étanchéité haute pression (31.1).

9. Pompe à piston selon la revendication 7 ou 8, **caractérisée en ce que** l'élément de cage (31) est réalisé sous forme de pièce moulée par injection de plastique avec l'élément d'étanchéité haute pression élastique (31.1).

10. Système de frein pour un véhicule, **caractérisé par** une pompe de refoulement, qui est réalisée sous forme de pompe de récupération (21) selon l'une quelconque des revendications 1 à 9.
